# EUROPEAN PATENT APPLICATION

(11) **EP 3 524 458 A1**
(43) Date of publication of application: **14.08.2019**
(21) Application number: 17857885.2
(22) Date of filing: 04.10.2017
(51) Int. Cl.: B60K 5/10, B62D 65/10

(54) **HEAVY-DUTY REAR-ENGINE VEHICLE WITH WEIGHT DISTRIBUTED ON A SUPPORT THAT IS INDEPENDENT FROM THE CHASSIS**

(30) Priority: 05.10.2016 ES 201631294
(71) Applicant: González Piñón, Carlos, 18005 Granada (ES)
(72) Inventor: González Piñón, Carlos, 18005 Granada (ES)
(74) Representative: Munoz Garcia, Antonio
(86) International application number: PCT/ES2017/070651
(87) International publication number: WO 2018/065652

(57) **Abstract**

Heavy-duty rear-engine vehicle with weight distributed on a support that is independent from the chassis, namely a coach or bus, with a support (5) on which the engine (2) is mounted and which is independent from the chassis (3) and joined thereto in an articulated manner. The support (5) is suspended from the bottom of the chassis (3). It is elongate and on the front end (5a) is joined to the rear axle (4) in a front portion thereof by means of a Torpress bellows (6) and a shock absorber (7), between the latter and the front axle (8), and on the rear end (5b) to the outer side member of the vehicle chassis (3) by means of a ball and socket joint (9). Mounted on the rear area of the support (5), between the rear axle (4) and its rear end (5b), is the kinematic train of the engine (2) and the gearbox (10) of the vehicle (1) that is linked to the differential (12) of the rear axle (4) through the transmission (11).

## Description

### OBJECT OF THE INVENTION

As expressed by the title of the present specification, the invention relates to a heavy-duty rear-engine vehicle with weight distributed on a support that is independent from the chassis, providing to its intended function the advantages and features described in detail below which constitute a remarkable novelty of the current state of the art.

More specifically, the object of the invention relates to a heavy-duty rear-engine vehicle, namely a coach or bus for the transport of people, in which instead of said engine and the set of elements associated therewith being mounted on the vehicle chassis, such elements are coupled to a support that is independent from the chassis and secured thereto in front of the differential rear axle by means of suspension elements, whereby distributing the load with the front axle and preventing any issues resulting from rear axle overload.

### FIELD OF APPLICATION OF THE INVENTION

The field of application of the present invention is comprised in the sector of the industry dedicated to manufacturing vehicles, particularly focusing on the area of manufacturing heavy-duty vehicles for the transport of people, and more specifically in manufacturing coaches and buses for passenger transport.

### BACKGROUND OF THE INVENTION

As is known, in all rear-engine vehicles today, and particularly in those concerned herein, the engine and the elements associated therewith are mounted directly on the vehicle chassis. However, and despite this being a wide-spread practice allowed by the administrations responsible for authorizing said vehicles, this often means pushing compliance limits too far or even directly failing to comply with the provisions laid out by the law concerning the weight distribution for which compliance is required.

Specifically, the Regulation on heavy-duty vehicles, emergency vehicles, and special vehicles for the transport of people and goods and administrative processing, 2013 edition, and Order pre/52/2010, of 21 January, chapter 2, concerning masses and dimensions, point D of section 2.2 concerning maximum masses allowed, stipulate that circulation of vehicles or articulated vehicles in which the weight supported by the drive axle or drive axles is less than 25% of the total loaded weight of the vehicle or articulated vehicles is prohibited.

As can be deduced, the goal of this regulation is to oversee the safety of said vehicles, and therefore endeavoring for strict compliance thereof would always be desirable. In most cases, the loads are inspected when the vehicle is stopped, failing to take into account their behavior when in motion, with the vehicle in circulation, which is when loads really act and their behavior directly affects the safety of the vehicle and, accordingly, its passengers.

In certain cases, the front overhang of the vehicle is prolonged to offset the axle loads when the provisions laid out in the mentioned guideline are not complied with even with the vehicle being stopped.

For example, it can be seen at first glance how rear-engine coaches, when coming off a speed bump, the passage of the front wheels considerable separates the vehicle from the ground, and it can logically be deduced that the weight which should fall on the front axle at that time does not. Likewise, with the powerful engines normally mounted in vehicles today, in fast takeoffs, the front axle suffers the same effect. In both cases, this circumstance entails a risk for stability, since adherence on the asphalt is severely deficient. Furthermore, if the coach geometry is not the correct geometry, it may entail a highly unfavorable combination for the safety of the vehicle and passengers, and an enormous responsibility for the driver, who has absolutely nothing to do with the responsibility of manufacturing the vehicle.

The objective of the present invention is to prevent said drawbacks and develop a new type of heavy-duty vehicle in which the distribution of the mass, when the engine is a rear engine, is not supported directly on the vehicle chassis to lighten the load thereof on the rear axle, and, accordingly, assure compliance with the premise that this axle supports less than 25% of the total.

Moreover, and in reference to the current state of the art, it should be pointed out that at least the applicant itself is unaware of the existence of any other heavy-duty rear-engine vehicle or similar invention presenting technical, structural, and constitutive features identical or similar to those of the invention proposed and claimed herein.

### DESCRIPTION OF THE INVENTION

Therefore, the heavy-duty rear-engine vehicle with weight distributed on a support that is independent from the chassis proposed by the invention is configured as a novelty in its field of application, with the characterizing details enabling it and suitably distinguishing it being provided in the final claims enclosed with the present description.

Specifically, as mentioned above, the invention proposes a heavy-duty rear-engine vehicle, namely a coach or bus for the transport of people which, unlike vehicles existing on the market today in which the engine and other elements of the kinematic train are mounted on the vehicle chassis, such elements are mounted on a support which, by way of a frame or sub-chassis, is independent from the vehicle chassis, being configured such that the load of the engine of other elements is distributed between both axles instead of falling on the rear axle.

To that end, said support has an elongate structure and on the front end it is joined, in an articulated manner and with shock absorption to the vehicle chassis at a point thereof in front of the rear axle, i.e., located between the rear axle and the front axle, and on its rear part it is joined to the outer side member of the vehicle chassis, also in an articulated manner.

Preferably, the support is mounted on the chassis, suspended from the bottom thereof, since there is usually not any available space on the top of said support and the joints would be more complex, while from the bottom, there is always space between the chassis and the ground.

In any case, mounted between the rear axle and the rear end of the support is the kinematic train of the engine and the gearbox which is linked to the differential of the rear axle through the transmission.

The described heavy-duty rear-engine vehicle with weight distributed on a support that is independent from the chassis therefore represents an innovation of structural and constitutive features unheard of until now, and these reasons, combined with its practical usefulness, provide sufficient grounds for being granted the exclusive privilege which is sought.

### DESCRIPTION OF THE DRAWINGS

To complement the description that is being made and for the purpose of helping to better understand the features of the invention, a set of drawings is attached to the present specification as an integral part thereof, in which the following is depicted in an illustrative and non-limiting manner:

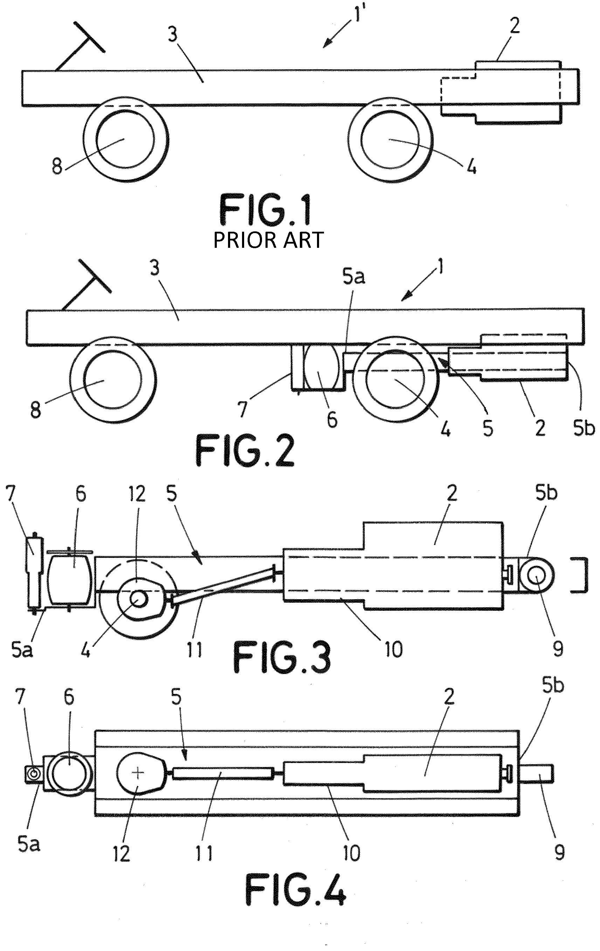

Figure 1 shows a schematic side elevational view of an example of a conventional heavy-duty rear-engine vehicle, showing the arrangement of the engine coupled to the vehicle chassis according to the prior art.
Figure 2 shows a schematic side elevational view of an example of the heavy-duty rear-engine vehicle with weight distributed on a support that is independent from the chassis, object of the invention, where the arrangement of the engine coupled to the independent support provided for that purpose can be seen.
Figures 3 and 4 show respective likewise schematic side elevational and plan views, respectively, of the support independent from the vehicle chassis according to the invention, showing therein the arrangement of the engine and the rest of the elements it comprises.

### PREFERRED EMBODIMENT OF THE INVENTION

In view of the mentioned drawings and according to the numbers used, in addition to a vehicle according to the prior art, a non-limiting example of the proposed vehicle, which comprises the parts and elements indicated and described in detail below, can be observed therein.

Therefore, in reference to said drawings in which the vehicle and its parts have been depicted in a very schematic manner since construction and configuration details are not part of the object of the invention, it can be seen how in heavy-duty vehicles according to the prior art (1'), with a rear engine (2), said engine (2) is coupled directly to the chassis (3) of the vehicle itself behind the rear axle (4) with the differential, such that the weight thereof determines a load on said axle.

In the vehicle (1) of the invention, however, the engine (2) is mounted on a support (5) which is an element independent from the vehicle chassis (3), designed by way of a frame or "sub-chassis" and joined to said chassis (3) in an articulated manner, preferably suspended from the bottom thereof.

More specifically, said support (5) consists of an elongate structure and on the front end (5a) it is joined in an articulated manner and with shock absorption, preferably by means of a Torpress bellows (6) and shock absorber (7), to the chassis (3) at a point of the rear axle (4), therefore being located between the rear axle (4) and the front axle (8), and on the rear part (5b), the support (5) is joined to the outer side member of the vehicle chassis (3), also in an articulated manner, in this case preferably by means of a ball and socket joint (9).

In any case, mounted on the rear area of the support (5), between the rear axle (4) and its rear end (5b), is the kinematic train of the engine (2) and the gearbox (10) of the vehicle (1) which is linked to the differential (12) of the rear axle (4) through the transmission (11).

Having sufficiently described the nature of the present invention as well as the manner of putting it into practice, it is not considered necessary to extend the explanation any further so that a person skilled in the art will understand its scope and the advantages derived from it, hereby stating that within its essential features, the invention may be carried out to practice in other embodiments which differ in detail from the embodiment indicated by way of example and which will likewise be covered by the protection that is granted provided that the fundamental principle thereof is not altered, changed, or modified.

## Claims

1. Heavy-duty rear-engine vehicle with weight distributed on a support that is independent from the chassis, namely a coach or bus for the transport of people, **characterized by** comprising a support (5) on which the engine (2) is mounted, said support (5) being an element independent from the vehicle chassis (3) and joined, by way of a frame or "sub-chassis", to said chassis (3) in an articulated manner.

2. Heavy-duty rear-engine vehicle with weight distributed on a support that is independent from the chassis according to claim 1, **characterized in that** the support (5) is suspended from the bottom of the chassis (3).

3. Heavy-duty rear-engine vehicle with weight distributed on a support that is independent from the chassis according to claim 1 or 2, **characterized in that** the support (5) is an elongate structure and on the front end (5a) it is joined in an articulated manner and with shock absorption to the chassis (3) at a point in front of the rear axle (4), therefore being located between the rear axle (4) and the front axle (8), and on the rear end (5b), the support (5) is joined to the outer side member of the vehicle chassis (3), also in an articulated manner.

4. Heavy-duty rear-engine vehicle with weight distributed on a support that is independent from the chassis according to claim 3, **characterized in that** a Torpress bellows (6) and shock absorber (7) are mounted for joining the front part (5a) of the support (5) to the chassis (3).

5. Heavy-duty rear-engine vehicle with weight distributed on a support that is independent from the chassis according to claim 3 or 4, **characterized in that** joining the rear part (5b) of the support (5) to the chassis (3) comprises a ball and socket joint (9).

6. Heavy-duty rear-engine vehicle with weight distributed on a support that is independent from the chassis according to any of claims 1 to 5, **characterized in that** mounted on the rear area of the support (5), between the rear axle (4) and its rear end (5b) is the kinematic train of the engine (2) and the gearbox (10) of the vehicle (1) which is linked to the differential (12) of the rear axle (4) through the transmission (11).
